# EUROPEAN PATENT SPECIFICATION

(11) **EP 3 930 265 B1**
(45) Date of publication and mention of the grant of the patent: **28.01.2026**
(21) Application number: 21176074.9
(22) Date of filing: 26.05.2021
(51) Int. Cl.: H04L 12/40

(54) **CAN TRANSCEIVER FOR PROVIDING REDUNDANCY IN A CAN SYSTEM**
CAN-SENDER-EMPFÄNGER ZUR BEREITSTELLUNG VON REDUNDANZ IN EINEM CAN-SYSTEM
ÉMETTEUR-RÉCEPTEUR CAN POUR FOURNIR UNE REDONDANCE DANS UN SYSTÈME CAN

(30) Priority: 26.06.2020 US 202016913273
(43) Date of publication of application: 29.12.2021
(73) Proprietor: NXP B.V., 5656 AG Eindhoven (NL)
(72) Inventor: van Dijk, Lucas Pieter Lodewijk, 5656 AG Eindhoven (NL); Olma, Georg, 5656 AG Eindhoven (NL); Wagner, Martin, 5656 AG Eindhoven (NL)
(74) Representative: Schmütz, Christian Klaus Johannes

(56) References cited:
- US-A1- 2002 097 789
- US-A1- 2012 051 241
- US-A1- 2016 196 230

## Description

### BACKGROUND

A Controller Area Network (CAN bus) is a vehicle bus standard designed to allow microcontrollers and devices to communicate with each other's' applications without a host computer. It is a message-based protocol, designed originally for multiplex electrical wiring within automobiles to save on copper, but can also be used in many other contexts. For each device the data in a packet is transmitted sequentially but in such a way that if more than one device transmits at the same time the highest priority device is able to continue while the others back off. Packets are received by all devices, including by the transmitting device. The CAN bus uses a twisted wire pair in which one wire is CANH and the other CANL. For one reason or another, these wires may not be property soldered and may show intermittent open that can cause bit errors and may cause an interruption in data communication. In addition, a microcontroller that uses the CAN bus may fail and cause safety issues. One way to solve the issues with the reliability of the CAN bus and other components on the CAN bus is to provide redundancy. However, providing a parallel redundant CAN bus, transceivers, chokes that couple transceivers with the CAN bus, etc. can add cost, maintenance and complexity of the communication system.
US 2016/196230 A1 relates to a method of operating a two-wire digital bus includes applying a bias voltage to the two-wire digital bus at a first interface node, measuring a common mode voltage of the two-wire digital bus at the first interface node, and adjusting the bias voltage at the first interface node based on the measured common mode voltage.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one embodiment, a transceiver is disclosed. The transceiver includes a first receiver line, a first transmitter line, a second receiver line, and a second transmitter line, wherein the first receiver line and the second receiver line are coupled to a receiver line selector and the first transmitter line and the second transmitter line are coupled to a transmitter line selector. A system monitor is included that is configured to monitor a controller area network (CAN) bus and the first transmitter line and to select the second transmitter line and the second receiver line if an error condition is detected through the monitoring of the first transmitter line. A voltage adjustment circuit is included to generate a bias voltage for a terminating capacitor of the CAN bus, wherein the voltage adjustment circuit is activated by the system monitor when an error condition is detected in the CAN bus.

In some examples, the system monitor is further configured to monitor the first receiver line for an error condition in the first receiver line and select the second transmitter line and the second receiver line through the receiver line selector and the transmitter line selector if an error condition is detected through the monitoring of the first receiver line. The receiver line selector and the transmitter line selector are configured to be operated simultaneously. The transceiver may include an enable circuit that is configured to disable communication to the CAN bus, wherein the enable circuit includes two switches in series that are operated simultaneously to disconnect power to CANL pin.

In some embodiments, the error condition comprises detection of an open wire in the CAN bus to thereby allow a communication with the CAN bus using one wire. The system monitor may include a CAN bus error detector which includes a first comparator, a first resistor and a second resistor, wherein the first comparator is connected across the second resistor and an end of the first resistor is connected to CANH pin. In another example, the system monitor may include a CAN bus error detector which includes a first comparator, a first resistor and a second resistor, wherein the comparator is connected across the second resistor and an end of the first resistor is connected to CANL pin. The CAN bus error detector may include a configurable voltage source which includes a first set of resistors coupled with a first switch and a second set of resistors coupled with a second switch. The first switch and the second switch are configured to bypass one or more of the plurality of resistors based on a control signal.

In some examples, the bias voltage is 1V or 4V depending on the error condition detected in the CAN bus. In some embodiments, the transceiver may include a pair of slope controller coupled together through a plurality of transistors and a plurality of diodes. The pair of slope controllers are operated by the system monitor to provide a differential voltage to CANH and CANL pins.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
FIG. 1 depicts a controller area network (CAN) bus with a terminating end capacitor in accordance with one or more embodiments of the present disclosure;
FIG. 2 depicts CAN bus communication protocol showing a representation of "0" and "1" based on a differential voltage at CANH and CANL;
FIG. 3 shows a transceiver in accordance with one or more embodiments of the present disclosure;
FIG. 4 shows a schematic of a circuit for adjusting a voltage at the terminating capacitor of CAN bus in accordance with one or more embodiments of the present disclosure;
FIG. 5 shows a schematic of a circuit for generating a variable voltage at the terminating capacitor of CAN bus to overcome intermittent open CANH or CANL wire in accordance with one or more embodiments of the present disclosure.
FIG. 6 shows a schematic of a circuit for generating a variable voltage to be applied at CANH or CANL to overcome intermittent open CANH or CANL wire in accordance with one or more embodiments of the present disclosure;
FIG. 7 shows an example implementation of an transmission enable module in accordance with one or more embodiments of the present disclosure; and
FIG. 8 shows a transceiver in accordance with one or more embodiments of the present disclosure; and
FIG. 9 depicts a CAN bus with a transceiver of Figure 2 in accordance with one or more embodiments of the present disclosure.

Note that figures are not drawn to scale. Not all components in the transceiver chip are shown. The omitted components are known to a person skilled in the art.

### DETAILED DESCRIPTION

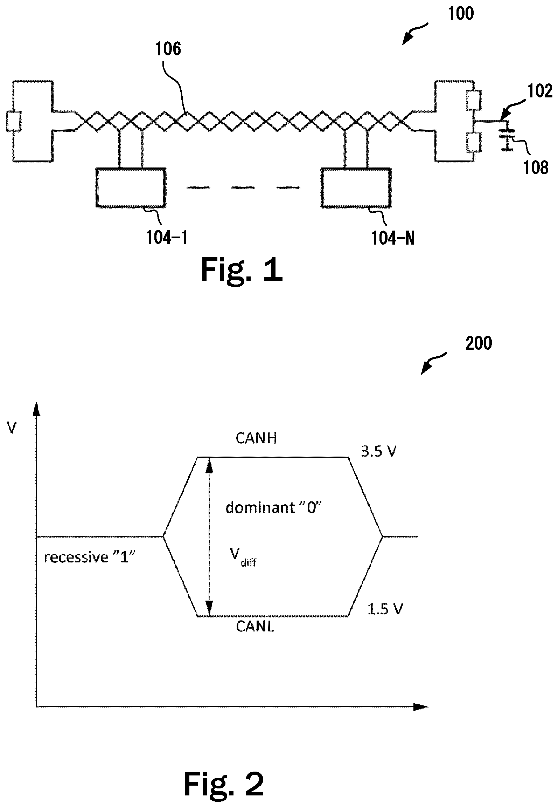

Figure 1 depicts a controller area network (CAN) bus 100 with a terminating end capacitor 108. The CAN bus 100 includes a twisted wire pair 106. The twisted wire pair 106 includes CANH and CANL wires. The CAN bus 100 may include one or more communication nodes 104-1..104-N. The capacitor 108 is typically 4.7nF. The value of the capacitor 108 may be increased to approximately 100nF. By increasing the value of the capacitor 108, a signal voltage at CANL or CANH during intermittent opens is improved. However, the improvement in the signal voltage is not sufficient to have a reliable communication during intermittent opens. The resistors coupled with the capacitor 108 are typically 60 ohm each.

As shown, the communication nodes (ECUs) 104-1... 104-N are connected via an unshielded twisted pair 106. Termination is implemented at the far left- and right-hand side of the CAN bus 100. There are two options, either by using a single resistor as shown in the lefthand side of the CAN bus 100, or via two resistors and the capacitor 108, referred to as "splittermination" as shown on the right-hand side of the CAN bus 100. The latter method is commonly used as it offers an additional low-pass filtering to improve EMC performance.

As shown in Figure 2, in normal operation (when no errors are present) the CAN bus 100 signals CANH and CANL are driven such that a differential voltage is generated (to send a dominant signal) or no differential signal is generated (to send a recessive bit). For a dominant bit ("0") the voltage at CANL is approximately 1.5V and the voltage at CANH is 3.5V and V_{diff} represents a difference between the voltages at CANH and CANL.

In some examples, the following error conditions may cause disruption in the communication on the CAN bus 100.
1. Open wire on CANH or CANL
2. Intermittent open wire on CANH or CANL
3. Open connection contact at CANH or CANL
4. Intermittent open connection contact at CANH or CANL
5. Open Solder joint contact at CANH or CANL
6. Intermittent open solder joint contact at CANH or CANL
7. Open Solder joint contact at TXDL or RXDL at microcontroller
8. Intermittent open Solder joint contact at TXDL or RXDL at microcontroller
9. Open Solder joint contact at TXDL or RXDL at transceiver
10. Intermittent open Solder joint contact at TXDL or RXDL at transceiver
11. When a common-mode choke is used, there are also associated errors possible with that (e.g. solder joint related).

A typical solution that uses a larger capacitor 108 has drawbacks. The bitrate is limited to 125 kbit/s. The solution needs external 511Ω (connected between RtL-pin of a CAN transceiver and CANL and between the RtH-pin of the CAN transceiver and CANH) at the terminating end. This solution does not allow for the "standardized" CAN transceiver pinout. The internal switches on RtH and RtL pins need to be implemented with high-voltage transistors such that the typical solution will require larger area on the silicon wafer for the CAN transceiver. Note that CAN transceivers are parts of the nodes 104-1...104-N. A CAN transceiver (not shown) interfaces between a CAN protocol controller (not shown) and the physical wires 106 of the CAN bus 100. CAN transceivers and CAN protocol controller is well known in the art.

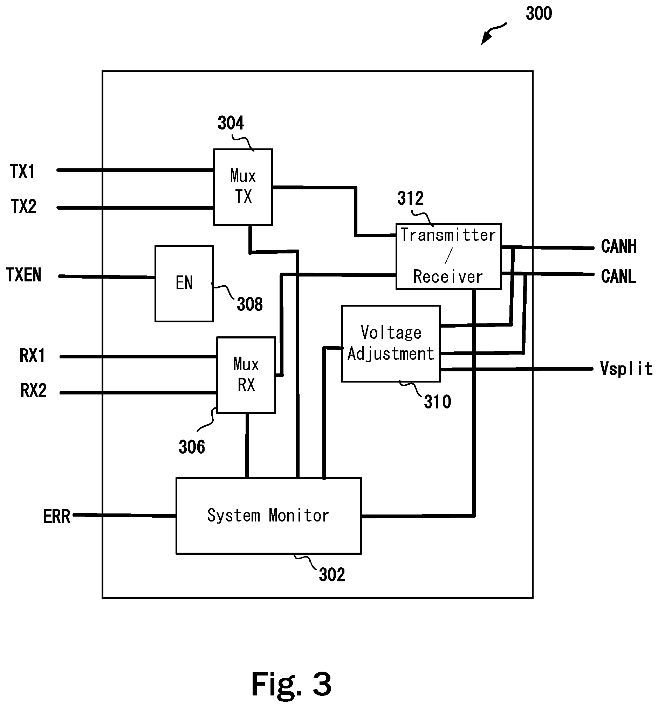

Figure 3 shows a CAN transceiver 300. The CAN transceiver 300 includes features to provide redundancy in terms of failure of CANL and CANH wires or failure in microcontrollers or a failure in communication between a microcontroller and the transceiver 300 or other bus conditions that may potentially cause or indicative of error conditions.

US Application No. US10785066B1 filed on Nov. 22, 2019 by the present inventor and entitled "CAN COMMUNICATION WITH BROKEN CABLE" describes adjusting bus split voltage. US Application No. US10838906B1filed on July 11, 2019 by the present inventor and entitled "COMMUNICATION BETWEEN TRANSCEIVER AND MICROCONTROLLER" describes two way communication between a microcontroller and a transceiver.

The transceiver 300 includes two transmitter pins TX1, TX2 and two receiver pins RX1, RX2. In some example, two microcontrollers or ECUs may be coupled with the transceiver 300 to provide redundancy in case of a microcontroller failure. For example, TX1 may be connected to Microcontroller 1 and TX2 may be connected to Microcontroller 2. Both microcontrollers may be coupled to two different subsystems (e.g., a braking control system) to provide a redundancy. This redundancy provides a better safety that is desirable in modern vehicles, especially with autonomous driving features. In some embodiments, the transceiver 300 may also support more than two microcontrollers.

The transceiver 300 includes a system monitor 302 that is configured to monitor TX1, TX2, RX1, RX2 lines. The system monitor 302 also monitors CANL and CANH lines to monitor voltages, for example. The system monitor 302 may also monitor temperature, safety and security related events on the CAN Bus 106. For example, the system monitor 302 may check if the communication on transmitter and receiver lines is compliant with CAN protocol. For example, the system monitor 302 may check the voltage levels and if the voltage levels are outside the a predefined thresholds and switch over to the second set of transmitter and receiver lines. The transceiver 300 may include ERR pin coupled the system monitor 302 to provide an error signal to an external entity such as a microcontroller (not shown) coupled wit the transceiver 300. TX1, TX2 lines may be coupled with a line selector (Mux TX) 304. The system monitor 302 may continuously monitor TX1 line for example and if it detects a failure in communication on TX1, the system monitor 302 may select TX2 line. In some examples, the system monitor 302 may also select RX2 line simultaneous to the selecting of TX2. The transmission failure may be detected by monitoring the voltage levels on TX1 and verifying data frames on TX1. When a switch over to TX2 occurs, the ERR signal may be activated so than an external (i.e., external to the transceiver 300) monitoring system may inform the operator of a vehicle, for example. In some example, a driving control system may steer the vehicle to a safe location for safety reasons. The redundancy feature provided by the transceiver 300 will continue to ensure a normal or controllable operation until the redundant component also fails. However, in some examples, the time interval between the failure of the first microcontroller and the second microcontroller may be sufficient to steer the vehicle to safety. A receiver line selector (Mux RX) 306 is included to switch between the first microcontroller and the second microcontroller. The Mux TX 304 and Mux RX 306 may be operated by the system monitor 302 in synchronization, that is, if TX2 is selected, RX2 is also selected. In some embodiments, the receiver line selector 306 and the transmitter line selector 304 may be implemented using toggle switches that may be operated using a same drive signal to toggle both switches simultaneously to switch from Microcontroller 1 to Microcontroller 2.

The transceiver 300 includes a transmitter and a receiver 312 that are coupled with CANL and CANH lines. The transmitter and the receiver are shown in a same box in Figure 3 for simplicity purposes. In some example, the transmitter and the receiver may be separately fabricated on a chip. The system monitor 302 may be coupled with the transmitter/receiver 312 to monitor the communication and also the voltage levels at CANH, CANL to identify any broken wire of error conditions in the reception or transmission of data. A voltage adjustment circuit 310 may be included to generate Vsplit voltage based on the monitoring of CANH and CANL lines to ensure a communication, at least for time being with some degradation, in case of an open CANL or CANH wire. A transmission enable circuit 308 may be provided to reliably stop transmission when a safety condition requires so.

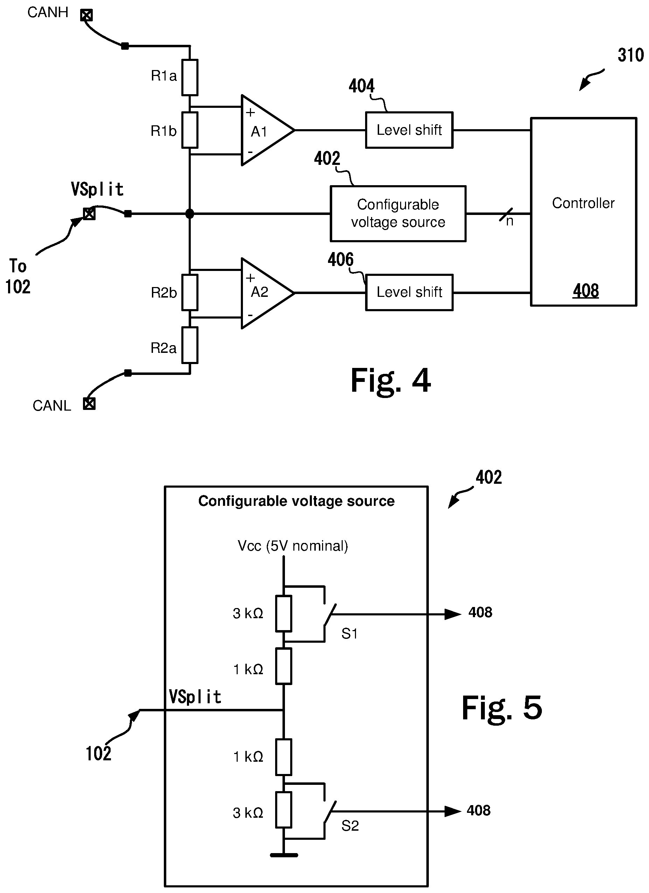

Figure 4 shows a sample implementation of a voltage adjustment circuit 310 for generating a bias voltage to overcome error conditions on CANH or CANL. The bias voltage is applied to the capacitor 108. The voltage adjustment circuit 310 includes a resistor R1a coupled to CANH and a resistor R1b. The resistors R1a and R1b are coupled with a comparator A1. An optional level shifter 404 may be included to change the voltage domain of the voltage at the output of the comparator A1. The voltage adjustment circuit 310 further includes resistors R2b and R2a that are coupled with a comparator A2. An optional level shifter 406 may be included to change the voltage domain of the voltage at the output of the comparator A2. A configurable voltage source 402 is included to adjust the voltage at the terminal of the capacitor 108.

The resistors R2b and R1b allow current sense in CANL and CANH branch respectively. The sensed current is converted via differential amplifiers A1 and A2 to a voltage. When the sensed current in the CANH branch (detected via the comparator A1) is zero but the sensed current in the CANL branch (detected via the comparator A2) is not zero, an open CANH connection is detected and the configurable voltage source 402 is configured to produce, in one example, 4V. Similarly, when the sensed current in the CANL branch (detected via the comparator A2) is zero but the sensed current in the CANH branch (detected via the comparator A1) is not zero, an open CANL connection is detected and the configurable voltage source 402 is configured to produce, in one example, 1V. In other cases the configurable voltage source 402 is biased to 2.5 V (Vcc/2 equivalent to half the supply voltage). A controller 408 is included to send control signals to the configurable voltage source 402 based on the sensed current in the CANH and CANL branches as described above.

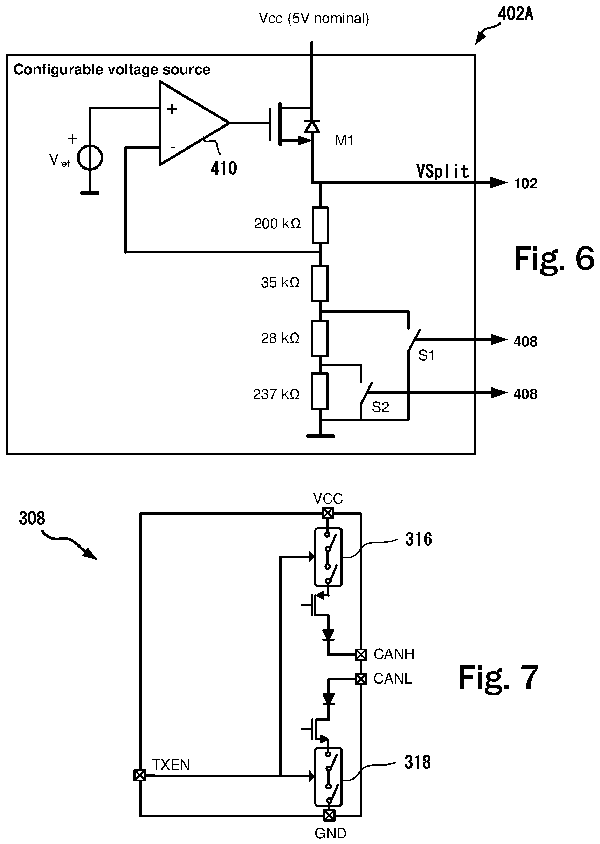

Various implementations are possible for the configurable voltage source 402. Figure 5 and Figure 6 show two such example implementations. Figure 5 shows a configurable voltage source 402 using a resistive divider. When the switch S1 and the switch S2 are both opened, the split voltage VSplit (that is applied to the terminal 102 of the capacitor 108) is set to 2.5V (Vcc divided by two). When the switch S1 is closed (and the switch S2 opened) the split voltage VSplit is set to 4V and when the switch S2 is closed (and the switch S1 opened) the split voltage VSplit is set to 1V. The switches S1 and S2 are opened or closed based on a control signal from the controller 408.

Figure 6 shows the configurable voltage source 402 in another embodiment 402A. In this embodiment, the configurable voltage source 402A includes a comparator 410 coupled with the reference voltage Vref and the comparator 410 is configured to drive a transistor M1. The switches S1 and S2 are controlled by a control signal from the controller 408. The configurable voltage source 402A operates based on a linear voltage regulator where the voltage feedback ladder is configured differently depending on the required nominal output voltage. The split voltage (VSplit) is set to 1V when both the switches S1 and S2 are opened. VSplit is set to 4 V when the switch S1 is closed and the switch S2 is opened. Vsplit can also be set to 2.5 V when the switch S2 is closed and the switch S1 is opened. It is noted that the reference voltage (Vref, equal to 0.6 V in the example embodiment) is a well-known Bandgap voltage reference but could alternatively be realized by a resistive divider connected to Vcc such that the output voltage would also track the supply voltage Vcc.

Figure 7 shows an example implementation of the EN module 308. The TXEN signal is used from an entity that is external to the transceiver 300 to enable or disable the transmission via the transceiver 300. During some security events it is important that the transmission of signals to the CAN bus 106 from the transceiver 300 is reliably stopped. The sample implementation uses a group of CANH switches 316 and a group of CANL switches 318. The groups of switches 316, 318 may include a plurality of individual switches in series. In some examples, the use of only one switch may not completely stop the transmission due to the switch failure (for example).

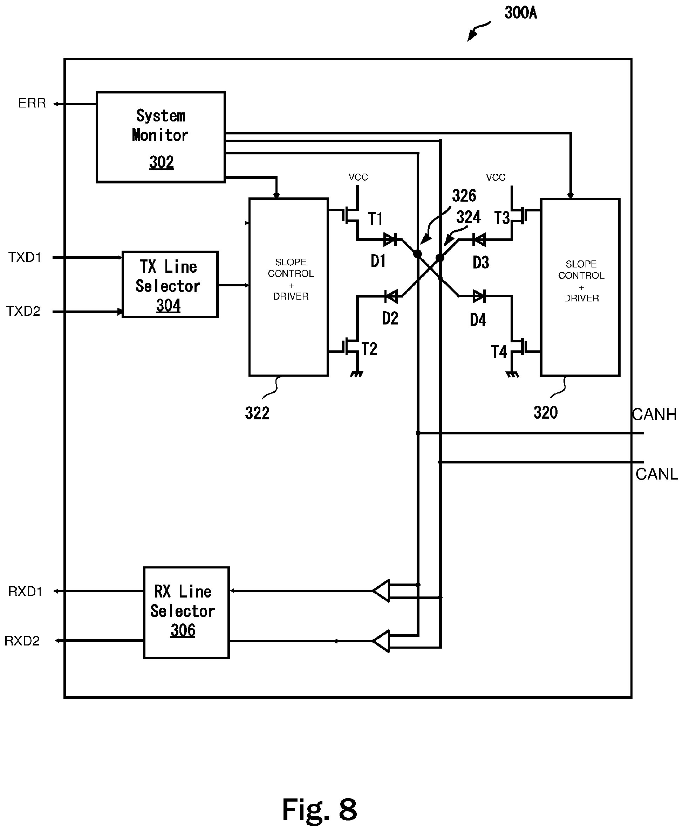

Figure 8 shows a transceiver 300A. As apparent, not all components are being shown in Figure 8 so as not to obfuscate the present disclosure. The transceiver 300A includes transistors T1, T2, T3, T4 and diodes D1, D2, D3, D4 coupled to a first slope controller 320 and a second slope controller 322. The slope controllers and the associated circuit arrangement including the transistors and the diode is used to provide CANL, CANH differential signal. The system monitor 302 may be coupled with the slope control circuit arrangement at joins 324 and 326. If the system monitor 302 detects an open CANH or open CANL, the system monitor 302 may provide voltage at the joins 324 or 326 such that even one wire has sufficient voltage swing to enable a communication via one wire. In some examples, the voltage swing is provided to CANL/CANH along with providing a bias voltage Vsplit to the capacitor 108, as described earlier.

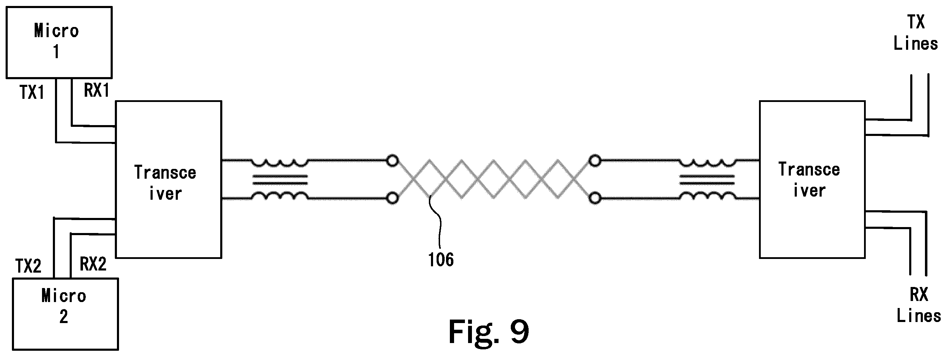

Figure 9 shows the CAN bus 106 in which the transceiver 300 is used. As shown, the transceiver 300 includes two RX lines and two TX lines to coupled with two ECUs or microcontrollers to provide a redundancy.

## Claims

1. A transceiver (300), comprising:
a first receiver line, a first transmitter line, a second receiver line, and a second transmitter line, wherein the first receiver line and the second receiver line are coupled to a receiver line selector (306) and the first transmitter line and the second transmitter line are coupled to a transmitter line selector (304);
a system monitor (302) configured to monitor a controller area network, CAN bus (100) and the first transmitter line and to select the second transmitter line and the second receiver line if an error condition is detected through the monitoring of the first transmitter line; and
a voltage adjustment circuit (310) configured to generate a bias voltage for a terminating capacitor (108) of the CAN bus (100), wherein the voltage adjustment circuit is activated by the system monitor (302) when an error condition is detected in the CAN bus (100).

2. The transceiver (300) of claim 1, wherein the system monitor (302) is further configured to monitor the first receiver line for an error condition in the first receiver line and select the second transmitter line and the second receiver line through the receiver line selector (306) and the transmitter line selector (304) if an error condition is detected through the monitoring of the first receiver line.

3. The transceiver (300) of claim 1 or 2, wherein the receiver line selector (306) and the transmitter line selector (304) are configured to be operated simultaneously.

4. The transceiver (300) of any preceding claim, further including an enable circuit (308) that is configured to disable communication to the CAN bus (100), wherein the enable circuit (308) includes two switches (218) in series that are operated simultaneously to disconnect power to CANL pin.

5. The transceiver (300) of any preceding claim, wherein the error condition comprises detection of an open wire in the CAN bus (100) to thereby allow a communication with the CAN bus (100) using one wire.

6. The transceiver (300) of any preceding claim, wherein the system monitor (302) includes a CAN bus error detector which includes a first comparator (A1), a first resistor (R1a) and a second resistor (R1b), wherein the first comparator (A1) is connected across the second resistor (R1b) and an end of the first resistor (R1a) is connected to CANH pin.

7. The transceiver (300) of claim 6, wherein the CAN bus error detector includes a configurable voltage source (402) which includes a first set of resistors coupled with a first switch (S1) and a second set of resistors coupled with a second switch (S2).

8. The transceiver (300) of claim 7, wherein the first switch and the second switch are configured to bypass one or more of the plurality of resistors based on a control signal.

9. The transceiver (300) of any preceding claim, wherein the bias voltage is 1V or 4V depending on the error condition detected in the CAN bus.

10. The transceiver of any preceding claim, further including a pair of slope controller (320, 322) coupled together through a plurality of transistors and a plurality of diodes.

11. The transceiver of claim 10, wherein the pair of slope controllers are operated by the system monitor to provide a differential voltage to CANH and CANL pins.

## Patentansprüche

1. Sendeempfänger (300), der Folgendes umfasst:
eine erste Empfängerleitung, eine erste Sendeleitung, eine zweite Empfängerleitung und eine zweite Sendeleitung, wobei die erste Empfängerleitung und die zweite Empfängerleitung mit einem Empfängerleitungsselektor (306) gekoppelt sind und die erste Sendeleitung und die zweite Sendeleitung mit einem Sendeleitungsselektor (304) gekoppelt sind;
einen Systemmonitor (302), der dazu ausgelegt ist, einen Controller-Area-Netzwerk-Bus, CAN-Bus, (100) und die erste Sendeleitung zu überwachen und die zweite Sendeleitung und die zweite Empfängerleitung auszuwählen, falls durch das Überwachen der ersten Sendeleitung ein Fehlerzustand detektiert wird; und
eine Spannungsanpassungsschaltung (310), die dazu ausgelegt ist, eine Vorspannung für einen Abschlusskondensator (108) des CAN-Busses (100) zu erzeugen, wobei die Spannungsanpassungsschaltung durch den Systemmonitor (302) aktiviert wird, wenn ein Fehlerzustand in dem CAN-Bus (100) detektiert wird.

2. Sendeempfänger (300) nach Anspruch 1, wobei der Systemmonitor (302) ferner dazu ausgelegt ist, die erste Empfängerleitung auf einen Fehlerzustand in der ersten Empfängerleitung zu überwachen und die zweite Sendeleitung und die zweite Empfängerleitung durch den Empfängerleitungsselektor (306) und den Sendeleitungsselektor (304) auszuwählen, falls ein Fehlerzustand durch das Überwachen der ersten Empfängerleitung detektiert wird.

3. Sendeempfänger (300) nach Anspruch 1 oder 2, wobei der Empfängerleitungsselektor (306) und der Senderleitungsselektor (304) dazu ausgelegt sind, gleichzeitig betrieben zu werden.

4. Sendeempfänger (300) nach einem der vorhergehenden Ansprüche, der ferner eine Freigabeschaltung (308) beinhaltet, die dazu ausgelegt ist, eine Kommunikation mit dem CAN-Bus (100) zu deaktivieren, wobei die Freigabeschaltung (308) zwei Schalter (218) in Reihe beinhaltet, die gleichzeitig betrieben werden, um die Stromversorgung zum CANL-Pin zu trennen.

5. Sendeempfänger (300) nach einem der vorhergehenden Ansprüche, wobei der Fehlerzustand Detektieren eines offenen Drahts in dem CAN-Bus (100) umfasst, um dadurch eine Kommunikation mit dem CAN-Bus (100) unter Verwendung eines Drahts zu ermöglichen.

6. Sendeempfänger (300) nach einem der vorhergehenden Ansprüche, wobei der Systemmonitor (302) einen CAN-Bus-Fehlerdetektor beinhaltet, der einen ersten Komparator (A1), einen ersten Widerstand (R1a) und einen zweiten Widerstand (R1b) beinhaltet, wobei der erste Komparator (A1) über den zweiten Widerstand (R1b) verbunden ist und ein Ende des ersten Widerstands (R1a) mit CANH-Pin verbunden ist.

7. Sendeempfänger (300) nach Anspruch 6, wobei der CAN-Bus-Fehlerdetektor eine konfigurierbare Spannungsquelle (402) beinhaltet, die einen ersten Satz von Widerständen, die mit einem ersten Schalter (S1) gekoppelt sind, und einen zweiten Satz von Widerständen, die mit einem zweiten Schalter (S2) gekoppelt sind, beinhaltet.

8. Sendeempfänger (300) nach Anspruch 7, wobei der erste Schalter und der zweite Schalter dazu ausgelegt sind, einen oder mehrere der mehreren Widerstände basierend auf einem Steuersignal zu umgehen.

9. Sendeempfänger (300) nach einem der vorhergehenden Ansprüche, wobei die Vorspannung 1 V oder 4 V beträgt, abhängig von der Fehlerbedingung, die in dem CAN-Bus detektiert wird.

10. Sendeempfänger nach einem der vorhergehenden Ansprüche, der ferner ein Paar einer Steigungssteuerung (320, 322) beinhaltet, die durch mehrere Transistoren und mehrere Dioden miteinander gekoppelt sind.

11. Sendeempfänger nach Anspruch 10, wobei das Paar von Steigungssteuerungen durch den Systemmonitor betrieben wird, um eine Differenzspannung an CANH- und CANL-Pins bereitzustellen.

## Revendications

1. Émetteur-récepteur (300), comprenant :
une première ligne de réception, une première ligne d'émission, une deuxième ligne de réception et une deuxième ligne d'émission, la première ligne de réception et la deuxième ligne de réception étant couplées à un sélecteur de ligne de réception (306) et la première ligne d'émission et la deuxième ligne d'émission étant couplées à un sélecteur de ligne d'émission (304) ;
un module de surveillance de système (302) configuré pour surveiller un bus CAN ("Controller Area Network") (100) et la première ligne d'émission et pour sélectionner la deuxième ligne d'émission et la deuxième ligne de réception si une condition d'erreur est détectée via la surveillance de la première ligne d'émission ; et
un circuit d'ajustement de tension (310) configuré pour générer une tension de polarisation pour un condensateur de terminaison (108) du bus CAN (100), le circuit d'ajustement de tension étant activé par le module de surveillance de système (302) lorsqu'une condition d'erreur est détectée dans le bus CAN (100).

2. Émetteur-récepteur (300) selon la revendication 1, dans lequel le module de surveillance de système (302) est configuré en outre pour surveiller la première ligne de réception à la recherche d'une condition d'erreur dans la première ligne de réception et sélectionner la deuxième ligne d'émission et la deuxième ligne de réception via le sélecteur de ligne de réception (306) et le sélecteur de ligne d'émission (304) si une condition d'erreur est détectée via la surveillance de la première ligne de réception.

3. Émetteur-récepteur (300) selon la revendication 1 ou 2, dans lequel le sélecteur de ligne de réception (306) et le sélecteur de ligne d'émission (304) sont configurés pour être pilotés simultanément.

4. Émetteur-récepteur (300) selon l'une quelconque des revendications précédentes, comportant en outre un circuit d'activation (308) qui est configuré pour désactiver la communication vers le bus CAN (100), le circuit d'activation (308) comportant deux interrupteurs (218) en série qui sont pilotés simultanément pour déconnecter l'alimentation de la broche CANL.

5. Émetteur-récepteur (300) selon l'une quelconque des revendications précédentes, dans lequel la condition d'erreur comprend la détection d'un fil ouvert dans le bus CAN (100) pour permettre ainsi une communication avec le bus CAN (100) à l'aide d'un seul fil.

6. Émetteur-récepteur (300) selon l'une quelconque des revendications précédentes, dans lequel le module de surveillance de système (302) comporte un détecteur d'erreur de bus CAN qui comporte un premier comparateur (A1), une première résistance (R1a) et une deuxième résistance (R1b), le premier comparateur (A1) étant connecté aux bornes de la deuxième résistance (R1b) et une extrémité de la première résistance (R1a) étant connectée à la broche CANH.

7. Émetteur-récepteur (300) selon la revendication 6, dans lequel le détecteur d'erreur de bus CAN comporte une source de tension configurable (402) qui comporte un premier ensemble de résistances couplé à un premier interrupteur (S1) et un deuxième ensemble de résistances couplé à un deuxième interrupteur (S2).

8. Émetteur-récepteur (300) selon la revendication 7, dans lequel le premier interrupteur et le deuxième interrupteur sont configurés pour court-circuiter une ou plusieurs de la pluralité de résistances sur la base d'un signal de commande.

9. Émetteur-récepteur (300) selon l'une quelconque des revendications précédentes, dans lequel la tension de polarisation est de 1 V ou 4 V en fonction de la condition d'erreur détectée dans le bus CAN.

10. Émetteur-récepteur selon l'une quelconque des revendications précédentes, comportant en outre une paire de contrôleurs de pente (320, 322) couplés ensemble via une pluralité de transistors et une pluralité de diodes.

11. Émetteur-récepteur selon la revendication 10, dans lequel la paire de contrôleurs de pente est pilotée par le module de surveillance de système pour fournir une tension différentielle aux broches CANH et CANL.
